# EUROPEAN PATENT APPLICATION

(11) **EP 4 789 898 A1**
(43) Date of publication of application: **12.08.2026**
(21) Application number: 26157183.0
(22) Date of filing: 09.02.2026
(51) Int. Cl.: B60L 3/00, B60W 40/06, B61K 9/00, B61L 23/04

(54) **SYSTEMS AND METHODS FOR DETERMINING AN ADHESION CONDITION OF A RAIL, AND VEHICLE**

(30) Priority: 10.02.2025 IT 202500002415
(71) Applicant: Faiveley Transport Italia S.p.A., 10045 Piossasco (TO) (IT)
(72) Inventor: FREA, Matteo, 10060 Cantalupa (Torino) (IT); PEIRETTI, Fabrizio, 10060 Castagnole Piemonte (Torino) (IT); GALLO, Mauro, 10043 Orbassano (Torino) (IT)
(74) Representative: Cristinelli, Luca

(57) **Abstract**

A system (100) is described for determining an adhesion condition of a rail (R), arranged to be associated with a vehicle (V) adapted to travel on said rail, particularly a railway vehicle, comprising:
- a capacitive sensor means (102) comprising a plate (104) arranged to be placed at a predetermined distance (d) from a rolling surface (RS) of the rail; or
- a capacitive sensor means (202) comprising a plate (204) arranged to be placed at a predetermined distance (d) from a wheel (W) of the vehicle, wherein said wheel is adapted to come into contact with a rolling surface (RS) of the rail.

The system (100) further comprises an electronic processing means (106) arranged for:
a) determining the capacitance value assumed by said capacitive sensor means (102);
b) determining the adhesion condition of the rolling surface (RS) of the rail as a function of the determined capacitance value.

A vehicle and a method for determining a condition of adhesion of a rail are further described.

## Description

### Technical sector

The present invention relates, in general, to the field of rail vehicles; in particular, the invention relates to systems for determining an adhesion condition of a rail, to corresponding methods for determining an adhesion condition of a rail, and to a vehicle.

### Prior art

The prior art for measuring wheel-to-rail adhesion is substantially based on "indirect" solutions based on image acquisition sensors, or on "direct" solutions, which implement a brake or traction control dedicated to estimating the adhesion. The second category includes, for example, solutions which apply a known braking force to one or more axles and detect their response in terms of rotational speed. The available adhesion in the wheel-to-rail contact can be inferred from the braking force and the angular acceleration.

Disadvantageously, the solutions based on image acquisition sensors require complex electronic solutions, based on artificial intelligence algorithms, for correctly interpreting the acquired images.

Instead, the direct adhesion measurements, while being reliable, may be performed only if braking torque is applied to the axle. Therefore, this measurement may only be performed during the step of braking, unless a dedicated brake control is implemented, which, for example, periodically applies a known braking force and detects the response of the axle in terms of angular acceleration.

Disadvantageously, the dedicated control solution allows adhesion measurement with the desired spatial-temporal resolution, but requires the periodic application of a braking force, not necessary for the traveling purposes of the vehicle, to at least one axle of the railway vehicle.

### Summary of the invention

It is an object of the present invention to provide alternative solutions for determining an adhesion condition of a rail which do not require complex electronic solutions for correct image interpretation and do not require periodically applying an unnecessary braking force to at least one axle of the vehicle.

The aforesaid and other objects and advantages are achieved:
- according to an aspect of the invention, by a system for determining an adhesion condition of a rail having the features defined in claim 1 or in claim 3;
- according to a further aspect of the invention, by a vehicle having the features defined in claim 11;
- according to a yet further aspect of the invention, by a method for determining an adhesion condition of a rail having the features defined in claim 12 or in claim 13.

Preferred embodiments of the invention are defined in the dependent claims, the contents of which are intended to form an integral part of this description.

### Brief description of the drawings

The functional and structural features of some preferred embodiments of a system for determining an adhesion condition of a rail, a method for determining an adhesion condition of a rail and a vehicle according to the invention will now be described. Reference is made to the accompanying drawings, in which:
- figure 1 shows an embodiment of a system for determining a rail adhesion condition;
- figure 2 shows a further embodiment of a system for determining a rail adhesion condition;
- figure 3 shows a degraded rail condition, when the plate of the capacitive sensor means is placed at a given distance from the rail;
- figure 4 shows a degraded rail condition, when the plate of the capacitive sensor means is placed at a given distance from the vehicle wheel;
- figure 5 shows a possible solution for the connection of electric energy supply means;
- figure 6 shows a further possible solution for the connection of electric energy supply means.

### Detailed description

Before explaining a plurality of embodiments of the invention in detail, it is worth noting that the application of the invention is not limited to the constructive details and to the configuration of the components presented in the following description or shown in the drawings. The invention can assume other embodiments and may be implemented or made in practice in different manners. It must also be understood that the phraseology and the terminology are only descriptive and must not be understood as limitative. The use of "include" and "comprise" and variations thereof are intended to comprise the elements enunciated below and their equivalents, as well as additional elements and equivalents thereof.

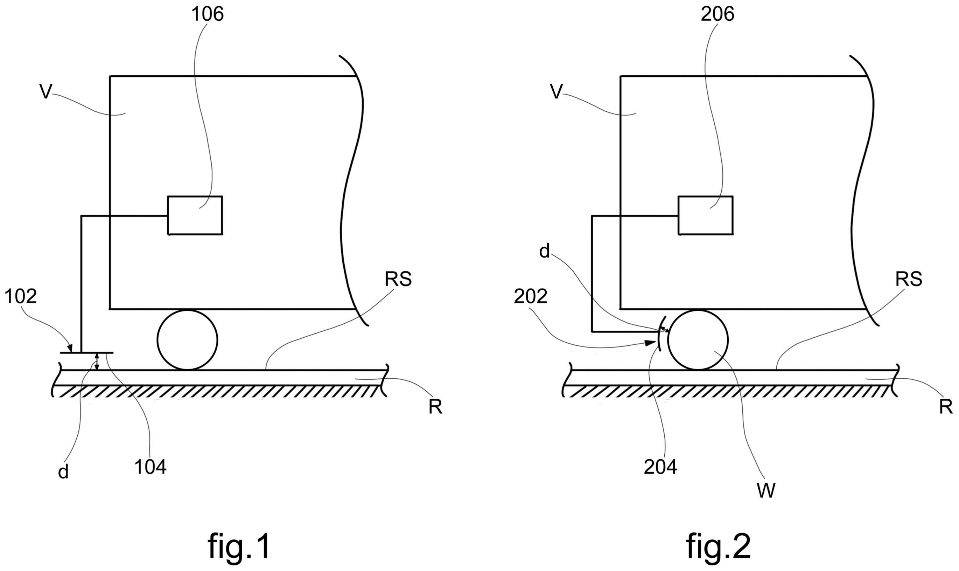

With initial reference to figure 1, a first embodiment of a system 100 for determining an adhesion condition of a rail R is described hereafter.

"Adhesion condition of a rail" may mean the state of a rolling surface of the rail itself, with particular reference to the presence of elements placed on the rail. This condition defines the tangential force transmission potential capacity of the wheel-to-rail contact, which depends on an available friction coefficient between wheel and rail (influenced by the elements placed on the rail). As explained in greater detail hereafter in the description, it may comprise, by way of example, the distinction between a clean and dry surface (nominal adhesion) and a surface contaminated by external agents, such as water, ice, oil, grease, or organic residues, such as fallen leaves (degraded or reduced adhesion), which may modify the available friction coefficient.

The system 100 for determining an adhesion condition of a rail is arranged to be associated with a vehicle V adapted to travel on said rail R.

The vehicle V may, for example, be a railway vehicle.

The system 100 for determining a condition of adhesion of a rail comprises a capacitive sensor means 102. The capacitive sensor means comprises a plate 104 arranged to be placed at a predetermined distance d from a rolling surface RS of the rail.

By way of non-limiting example, the predetermined distance d may be comprised between 2 mm and 10 mm.

In general, a capacitive sensor means is capable of measuring electrical capacitance. For example, the capacitive sensor means may be or may comprise a capacitive proximity sensor. For example, a capacitive proximity sensor may be based on the concept of detecting the electric capacitance of a capacitor. The sensitive side of the capacitive sensor may form a plate, and the presence of a conductive object near the sensitive side may form the second plate of the capacitor.

Furthermore, the system 100 for determining a rail adhesion condition comprises an electronic processing means 106 arranged for:
a) determining the capacitance value assumed by said capacitive sensor means 102;
b) determining the adhesion condition of the rolling surface RS of the rail as a function of the determined capacitance value.

Preferably, the plate 104 of the capacitive sensor means 102 may be a flat surface arranged to be placed parallel to the rolling surface RS of the rail.

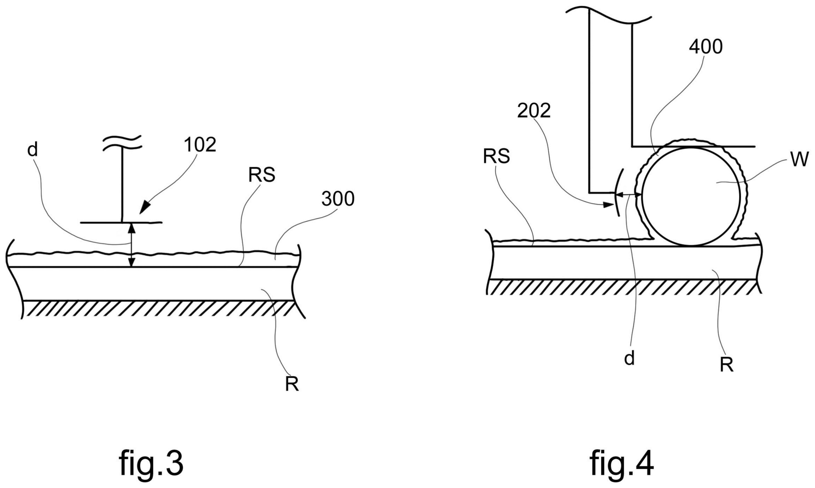

According to the present invention, it is thus possible to determine the adhesion condition as a function of the determined capacitance value. This is possible because the capacitance of a capacitive sensor means is dependent on the dielectric present between its plate and the rail (which serves as the second plate). For example, in the event of a good rail condition, e.g. a dry or uncontaminated rail, there will be substantially nothing other than air between the plate and the rail. Therefore, the capacitance detected by the capacitive sensor means will prevalently be dependent on the dielectric constant of air (i.e. the dielectric present between the plate and the rail). Conversely, in the event of degraded rail condition, e.g., wet or contaminated rail, water or contaminant 300 will be present on the rail. An example of a degraded rail condition is shown in figure 3. Therefore, the capacitance detected by the capacitive sensor means will be dependent on the dielectric constant of air and the water/contaminant (placed on the rail) present between the plate of the capacitive sensor means and the rail. Consequently, it is possible to determine the rail condition by monitoring the capacitance value measured by the capacitive sensor means.

Hereafter, with reference to figure 2, a further embodiment of a system 200 for determining an adhesion condition of a rail is described, the system being arranged to be associated with a vehicle V adapted to travel on said rail R. Again, the vehicle V may be, for example, a railway vehicle.

The system 200 for determining an adhesion condition of a rail comprises a capacitive sensor means 202 comprising a plate 204 arranged to be placed at a predetermined distance d from a wheel W of the vehicle V. The wheel W is arranged to come into contact with a rolling surface RS of the rail.

By way of non-limiting example, the predetermined distance d may be comprised between 2 mm and 10 mm.

Furthermore, the system 200 for determining a rail adhesion condition comprises an electronic processing means 206 arranged for:
a) determining the capacitance value assumed by said capacitive sensor means 202;
b) determining the adhesion condition of the rolling surface RS of the rail as a function of the determined capacitance value.

Preferably, the plate 204 of the capacitive sensor means 202 may be a curved surface arranged to be placed parallel to said wheel W. Thereby, the plate 204 of the capacitive sensor means 202 will be able to follow the curvature of the wheel W.

According to the present invention, it is thus possible to determine the adhesion condition as a function of the determined capacitance value. This is possible because the capacitance of a capacitive sensor means is dependent on the dielectric present between its plate and the wheel (which acts as a second plate). For example, in the event of good rail condition, e.g. dry or uncontaminated rail, nothing will be collected upon the passage of the wheel on the rail, and the wheel will remain substantially clean. Therefore, the capacitance detected by the capacitive sensor means will be prevalently dependent on the dielectric constant of air (i.e. the dielectric present between the plate and the wheel). Conversely, in the event of a degraded rail condition, e.g. wet or contaminated rail, upon the passage of the wheel on the rail, the water or the contaminant 400 will be collected on the surface of the wheel. An example of a degraded rail condition is shown in figure 4. Therefore, the capacitance detected by the capacitive sensor means will be dependent on the dielectric constant of the air and of the water/contaminant placed between the wheel and the plate of the capacitive sensor means. Consequently, it is possible to determine the rail condition by monitoring the capacitance value measured by the capacitive sensor means.

By way of non-limiting example, an electronic processing means 106, 206 may be or comprise at least one of a control circuit, a controller, a microcontroller, a processor, a microprocessor, an FPGA, a PLE, a computer, or the like.

Preferably, with reference to any of the embodiments described above, the system 100, 200 for determining an adhesion condition of a rail may comprise an electric energy supply means 500 arranged to generate a potential difference between a first terminal thereof T1 and a second terminal thereof T2.

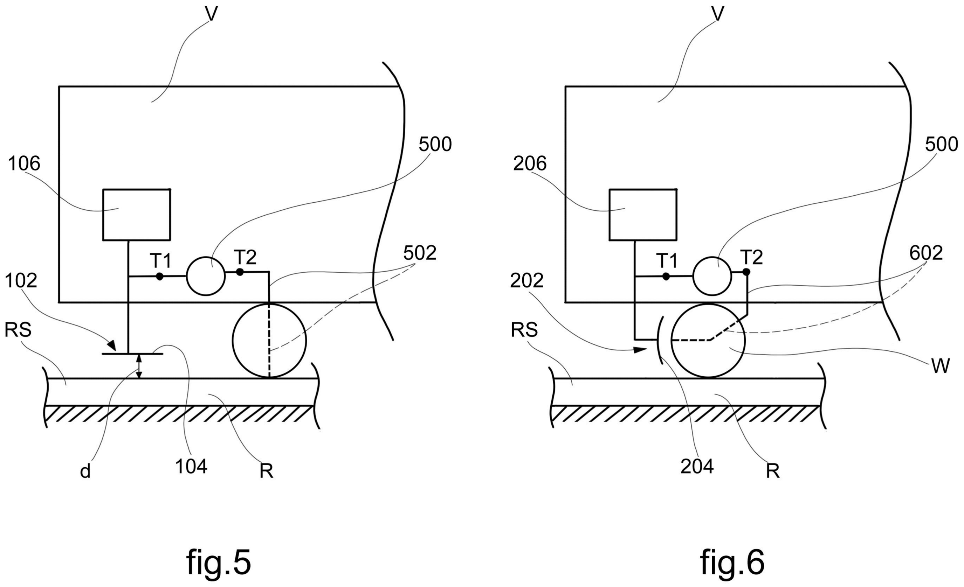

Preferably, as can be seen in figure 5, when the capacitive sensor means 102 comprises a plate 104 arranged to be placed at a predetermined distance from a rolling surface RS of the rail:
- the first terminal T1 of the electric energy supply means 500 may be arranged to be electrically connected, either directly or indirectly, to the capacitive sensor means 102 (e.g., to the plate of the capacitive sensor means);
- the second terminal T2 of the electric energy supply means 102 may be arranged to be electrically connected, either directly or indirectly, to the rolling surface RS of the rail.

For example, as can be seen in figure 5, the second terminal T2 of the electric energy supply means 102 may be arranged to be electrically connected to the vehicle wheel (or to another element of the vehicle conductively connected to the wheel, e.g. the bogie), so as to be indirectly connected to the rolling surface RS of the rail by means of a conductive path 502.

Instead, as can be seen in figure 6, when the capacitive sensor means 202 comprises a plate 204 arranged to be placed at a predetermined distance from a vehicle wheel W:
- the first terminal T1 of said electric energy supply means 500 may be arranged to be electrically connected, either directly or indirectly, to said capacitive sensor means 202 (e.g., to the plate of the capacitive sensor means);
- the second terminal T2 of said electric energy supply means 500 may be arranged to be electrically connected, either directly or indirectly, to said wheel of the vehicle.

For example, as can be seen in figure 6, the second terminal T2 of the electric energy supply means 102 may be arranged to be electrically connected to the wheel of the vehicle (or to another element of the vehicle in conductive connection with the wheel, e.g., the bogie), so as to create a conductive path 602.

Preferably, with reference to any of the embodiments described above, the electric energy supply means 500 may comprise a direct voltage or an alternating voltage power supply.

Preferably, with reference to any of the embodiments described above, to determine the adhesion condition of the rolling surface of the rail as a function of the determined capacitance value, the electronic processing means 106, 206 may be arranged for:
- comparing the determined capacitance value with a plurality of predetermined capacitance values, wherein a respective rail adhesion condition is associated with each predetermined capacitance value;
- determining that the adhesion condition of the rolling surface RS of the rail is the respective rail adhesion condition associated with the predetermined capacitance value corresponding to the determined capacitance value or closest to the determined capacitance value.

For example, the plurality of predetermined capacitance values may be stored in memory means associated with the electronic processing means 106, 206 or comprised in the electronic processing means 106, 206. For example, the memory means may be or comprise a non-volatile memory, e.g. a ROM, a flash memory, an optical or magnetic storage device.

Preferably, with reference to any of the embodiments described above, each respective rail adhesion condition may be, for example, at least one of:
- a wet rail condition;
- a dry rail condition;
- a rail condition contaminated by a contaminant deposited on the rolling surface of the rail;
- a rail condition not contaminated by a contaminant;
- a rail condition corresponding to a specific adhesion value.

The expression "rail condition corresponding to a specific adhesion value" may mean the possibility of determining that the rail condition corresponds to a numerical parameter representative of the available friction coefficient µ in the wheel-to-rail contact. In this embodiment, the processing means is not limited to a binary or qualitative classification (e.g., dry/wet), but may determine that the rail condition corresponds to a specific adhesion value. This may make it possible to provide immediate quantitative information on the usable adhesion limit.

In a further aspect, the present invention relates to a vehicle. In an embodiment, the vehicle comprises:
- a wheel arranged to come into contact with a rolling surface of a rail;
- a system 100, 200 for determining a rail adhesion condition according to any of the embodiments described above.

In a yet further aspect, the present invention relates to a method for determining an adhesion condition of a rail, implemented by means of an electronic processing means.

In an embodiment, the method comprises the steps of:
- determining a capacitance value by means of a capacitive sensor means 102 comprising a plate 104 placed at a predetermined distance d from a rolling surface RS of a rail;
- determining an adhesion condition of the rolling surface RS of the rail as a function of the determined capacitance value.

Preferably, the method may further comprise the step of:
- placing a plate 104 of a capacitive sensor means 102 at a predetermined distance d from a rolling surface RS of a rail.

In a further embodiment, the method comprises the steps of:
- determining a capacitance value by means of a capacitive sensor means 202 comprising a plate 204 placed at a predetermined distance d from a wheel W of a vehicle V arranged to come into contact with a rolling surface RS of the rail;
- determining an adhesion condition of the rolling surface RS of the rail as a function of the determined capacitance value.

Preferably, the method may comprise the step of:
- placing a plate 204 of a capacitive sensor means 202 at a predetermined distance d from a wheel W of a vehicle V, wherein the wheel W is arranged to come into contact with a rolling surface RS of the rail.

All the embodiments described above for the system for determining an adhesion condition of a rail may similarly also apply to the methods for determining an adhesion condition of a rail described above although they are not repeated here.

Terms such as "processing", "calculating" or "determining" refer to the operations performed by the processing means (e.g. a control circuit), which may, for example, include computer systems or electronic devices which may handle data represented as physical (electronic) quantities in memories or registers. One or more components may be described as "configured to", "configurable to", "operable/operative for", "adapted/adaptable to", "arranged to" or similar terms. Unless explicitly indicated, these terms comprise components in both an active state and an inactive state. Unless otherwise specified, terms such as "including" or "having" must be interpreted as open terms (i.e. "including but not limited to"). Numerical indications generally refer to "at least" the indicated number, and disjunctive terms such as "A or B" must be interpreted as including one or both, unless explicitly specified. The operations contained in a claim may be performed in any order, unless explicitly indicated. The expression "at least one of A, B and C" must be interpreted as any combination of A, B and C, such as A alone, B alone, C alone, A and B together, A and C together, B and C together and/or A, B and C together. For example, the phrase "at least one of A, B or C" must be interpreted as a combination of A, B, C, A and B, A and C, B and C and/or A, B and C together.

The present written description may disclose different embodiments of the invention, including the best manner, and may allow a person ordinarily skilled in the art to put the embodiments of the invention into practice, including making and using of any device or system and performing any incorporated method. The scope of patentability of the invention is defined by the claims and may include other embodiments which may be made by a person ordinarily skilled in the art. Such other embodiments may be understood as falling within the scope of the claims if they have structural elements which do not differ from the literal language of the claims, or if they include equivalent structural elements with differences which are not substantial with respect to the literal language of the claims.

Therefore, the achieved advantage is that of having provided alternative solutions for determining a rail adhesion condition, which do not require, for example, complex electronic solutions for correctly interpreting images, and do not require periodically applying an unnecessary braking force to at least one axle of the railway vehicle.

Various aspects and embodiments of a system for determining an adhesion condition of a rail, a method for determining an adhesion condition of a rail, and a vehicle according to the invention have been described. It is understood that each embodiment can be combined with any other embodiment. Furthermore, the invention is not limited to the described embodiments but can be varied within the scope defined by the accompanying claims.

## Claims

1. A system (100) for determining an adhesion condition of a rail (R), arranged to be associated with a vehicle (V) adapted to travel on said rail, particularly a railway vehicle, comprising:
- a capacitive sensor means (102) comprising a plate (104) arranged to be placed at a predetermined distance (d) from a rolling surface (RS) of the rail;
- an electronic processing means (106) arranged for:
a) determining the capacitance value assumed by said capacitive sensor means (102);
b) determining the adhesion condition of the rolling surface (RS) of the rail as a function of the determined capacitance value.

2. The system (100) according to claim 1, wherein said plate (104) of said capacitive sensor means (102) is a flat surface arranged to be placed parallel to said rolling surface (RS) of the rail.

3. A system (200) for determining an adhesion condition of a rail (R), arranged to be associated with a vehicle (V) adapted to travel on said rail, particularly a railway vehicle, comprising:
- a capacitive sensor means (202) comprising a plate (204) arranged to be placed at a predetermined distance (d) from a wheel (W) of the vehicle, wherein said wheel is arranged to come into contact with a rolling surface (RS) of the rail;
- an electronic processing means (206) arranged for:
a) determining the capacitance value assumed by said capacitive sensor means (202);
b) determining the adhesion condition of the rolling surface (RS) of the rail as a function of the determined capacitance value.

4. The system (200) according to claim 3, wherein said plate (204) of said capacitive sensor means (202) is a curved surface arranged to be placed parallel to said wheel (W).

5. The system according to any one of the preceding claims, comprising an electric energy supply means (500) arranged to generate a potential difference between a first terminal thereof (T1) and a second terminal thereof (T2).

6. The system (100) according to claim 5, when dependent on claim 1, wherein:
- the first terminal (T1) of said electric energy supply means (500) is arranged to be electrically connected, either directly or indirectly, to said capacitive sensor means (102);
- the second terminal (T2) of said electric energy supply means (500) is arranged to be electrically connected, either directly or indirectly, to said rolling surface (RS) of said rail.

7. The system (200) according to claim 5, when dependent on claim 3, wherein:
- the first terminal (T1) of said electric energy supply means (500) is arranged to be electrically connected, either directly or indirectly, to said capacitive sensor means (202);
- the second terminal (T2) of said electric energy supply means (500) is arranged to be electrically connected, either directly or indirectly, to said wheel (W) of said vehicle.

8. The system (100, 200) according to any one of claims 5 to 7, wherein said electric energy supply means (500) comprises a DC or AC voltage supply.

9. The system (100, 200) according to any one of the preceding claims, wherein, to determine the adhesion condition of the rolling surface of the rail as a function of the determined capacitance value, the electronic processing means (106, 206) is arranged for:
- comparing the determined capacitance value with a plurality of predetermined capacitance values, wherein a respective rail adhesion condition is associated with each predetermined capacitance value;
- determining that the adhesion condition of the rolling surface of the rail is the respective rail adhesion condition associated with the predetermined capacitance value corresponding to the determined capacitance value or closest to the determined capacitance value.

10. The system (100, 200) according to claim 9, wherein each respective rail adhesion condition is at least one of:
- a wet rail condition;
- a dry rail condition;
- a rail condition contaminated by a contaminant deposited on the rolling surface of the rail;
- a rail condition not contaminated by a contaminant;
- a rail condition corresponding to a specific adhesion value.

11. A vehicle comprising:
- a wheel arranged to come into contact with a rolling surface of a rail;
- a system (100, 200) for determining an adhesion condition of a rail according to any one of the preceding claims.

12. A method for determining an adhesion condition of a rail, implemented by means of electronic processing means, comprising the steps of:
- determining a capacitance value by means of a capacitive sensor means (102) comprising a plate (104) placed at a predetermined distance (d) from a rolling surface (RS) of a rail;
- determining the adhesion condition of the rolling surface (RS) of the rail as a function of the determined capacitance value.

13. A method for determining an adhesion condition of a rail, implemented by means of electronic processing means, comprising the steps of:
- determining a capacitance value by means of a capacitive sensor means (202) comprising a plate (204) placed at a predetermined distance (d) from a wheel (W) of a vehicle (V) arranged to come into contact with a rolling surface (RS) of the rail;
- determining the adhesion condition of the rolling surface of the rail as a function of the determined capacitance value.
